(19) Europäisches Patentamt
European Patent Office
Office européen des brevets

(11) EP 0 792 311 B1

(12) # EUROPÄISCHE PATENTSCHRIFT

(45) Veröffentlichungstag und Bekanntmachung des Hinweises auf die Patenterteilung:
**03.03.1999 Patentblatt 1999/09**

(21) Anmeldenummer: **95937865.4**

(22) Anmeldetag: **04.11.1995**

(51) Int Cl.[6]: **C08G 63/91**, C08G 63/60

(86) Internationale Anmeldenummer:
**PCT/EP95/04335**

(87) Internationale Veröffentlichungsnummer:
**WO 96/15175 (23.05.1996 Gazette 1996/23)**

(54) **BIOLOGISCH ABBAUBARE POLYMERE, VERFAHREN ZU DEREN HERSTELLUNG SOWIE DEREN VERWENDUNG ZUR HERSTELLUNG BIOABBAUBARER FORMKÖRPER**

BIODEGRADABLE POLYMERS, PROCESS FOR THEIR PREPARATION AND THEIR USE FOR PRODUCING BIODEGRADABLE MOULDED BODIES

POLYMERES BIODEGRADABLES, LEUR PROCEDE DE PRODUCTION ET LEUR UTILISATION POUR LA FABRICATION DE CORPS MOULES BIODEGRADABLES

(84) Benannte Vertragsstaaten:
**BE CH DE DK ES FR GB IT LI NL**

(30) Priorität: **15.11.1994 DE 4440850**

(43) Veröffentlichungstag der Anmeldung:
**03.09.1997 Patentblatt 1997/36**

(73) Patentinhaber: **BASF AKTIENGESELLSCHAFT
67056 Ludwigshafen (DE)**

(72) Erfinder:
- **WARZELHAN, Volker
D-67273 Weisenheim (DE)**
- **SCHORNICK, Gunnar
D-67271 Neuleiningen (DE)**
- **KRONER, Matthias
D-67304 Eisenberg (DE)**
- **SEELIGER, Ursula
D-67059 Ludwigshafen (DE)**
- **YAMAMOTO, Motonori
D-68199 Mannheim (DE)**
- **BÜSCHL, Rainer
D-67459 Böhl-Iggelheim (DE)**

(56) Entgegenhaltungen:
**EP-A- 0 569 143** **US-A- 5 097 005**

- **DATABASE WPI Week 9231 Derwent Publications Ltd., London, GB; AN 92-256555 & JP,A,04 175 375 (NIPPON OILS & FATS CO LTD) , 23.Juni 1992**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 792 311 B1

## Beschreibung

Die vorliegende Erfindung betrifft biologisch abbaubare Polyester Q1 mit einem Molekulargewicht ($M_n$) im Bereich von 6000 bis 60000 g/mol, einer Viskositätszahl im Bereich von 30 bis 350 g/ml (gemessen in o-Dichlorbenzol/Phenol (Gew.-Verhältnis 50/50) bei einer Konzentration von 0,5 Gew.-% Polyester Q1 bei einer Temperatur von 25°C) und einem Schmelzpunkt im Bereich von 50 bis 170°C, erhältlich durch Reaktion einer Mischung bestehend im wesentlichen aus

(a1) von 95 bis 99,9 Gew.-% eines Polyesters P1, erhältlich durch Reaktion einer Mischung, bestehend im wesentlichen aus

(b1) einer Mischung, bestehend im wesentlichen aus

35 bis 95 mol-% Adipinsäure oder esterbildende Derivate davon oder Mischungen davon,

5 bis 65 mol-% Terephthalsäure oder esterbildende Derivate davon oder Mischungen davon, und

0 bis 5 mol-% einer sulfonatgruppenhaltgen Verbindung, wobei die Summe der einzelnen Molprozentangaben 100 mol-% beträgt, und

(b2) einer Dihydroxyverbindung, ausgewählt aus der Gruppe bestehend aus $C_2$-$C_6$-Alkandiolen und $C_5$- $C_{10}$-Cycloalkandiolen, wobei man das Molverhältnis von (b1) zu (b2) im Bereich von 0,4:1 bis 1,5:1 wählt,

mit der Maßgabe, daß die Polyester P1 ein Molekulargewicht ($M_n$) im Bereich von 5000 bis 50000 g/mol, eine Viskositätszahl im Bereich von 30 bis 350 g/ml (gemessen in o-Dichlorbenzol/Phenol (Gew.-Verhältnis 50/50) bei einer Konzentration von 0,5 Gew.-% Polyester P1 bei einer Temperatur von 25°C) und einen Schmelzpunkt im Bereich von 50 bis 170°C aufweisen, und mit der weiteren Maßgabe, daß man von 0 bis 5 mol-%, bezogen auf die Molmenge der eingesetzten Komponente (b1), einer Verbindung D mit mindestens drei zur Esterbildung befähigten Gruppen zur Herstellung der Polyester P1 einsetzt,

(a2) von 0,1 bis 5 Gew.-% eines Divinylethers C1 und

(a3) von 0 bis 5 mol-%, bezogen auf Komponente (b1) aus der Herstellung von P1, Verbindung D.

Des weiteren betrifft die Erfindung weitere Polymere und biologisch abbaubare thermoplastische Formmassen gemäß Unteransprüche, Verfahren zu deren Herstellung, deren Verwendung zur Herstellung biologisch abbaubarer Formkörper sowie Klebstoffe, biologisch abbaubare Formkörper, Schäume und Blends mit Stärke, erhältlich aus den erfindungsgemäßen Polymeren bzw. Formmassen.

Polymere, die biologisch abbaubar sind, d.h. die unter Umwelteinflüssen in einer angemessenen und nachweisbaren Zeitspanne zerfallen, sind seit einiger Zeit bekannt. Der Abbau erfolgt dabei in der Regel hydrolytisch und/oder oxidativ, zum überwiegenden Teil jedoch durch die Einwirkung von Mikroorganisman wie Bakterien, Hefen, Pilzen und Algen. Y.Tokiwa und T. Suzuki (Nature, Bd. 270, S. 76-78, 1977) beschreiben den enzymatischen Abbau von aliphatischen Polyestern, beispielsweise auch Polyester auf der Basis von Bernsteinsäure und aliphatischer Diole.

In der EP-A 565,235 werden aliphatische Copolyester, enthaltend [-NH-C(O)O-] -Gruppen ("Urethan-Einheiten"), beschrieben. Die Copolyester der EP-A 565,235 werden durch Umsetzung eines Präpolyesters - erhalten durch Umsetzung von im wesentlichen Bernsteinsäure und eines aliphatischen Diols - mit einem Diisocyanat, bevorzugt Hexamethylendiisocyanat, erhalten. Die Umsetzung mit einem Diisocyanat ist gemäß der EP-A 565,235 erforderlich, da durch die Polykondensation alleine nur Polymere mit solchen Molekulargewichten erhalten werden, die keine befriedigenden mechanischen Eigenschaften aufweisen. Von entscheidendem Nachteil ist die Verwendung von Bernsteinsäure oder deren Esterderivate zur Herstellung der Copolyester, weil Bernsteinsäure bzw. deren Derivate teuer und in nicht genügender Menge auf dem Markt verfügbar sind. Außerdem werden bei Verwendung von Bernsteinsäure als einziger Säurekomponente die daraus hergestellten Polyester nur extrem langsam abgebaut.

Eine Kettenverlängerung kann nach der EP-A 534,295 vorteilhaft auch durch Umsetzung mit Divinylethern erzielt werden.

Aus der WO 92/13019 sind Copolyester auf Basis überwiegend aromatischer Dicarbonsäuren und aliphatischer Diole bekannt, wobei mindestens 85 mol-% des Polyesterdiolrestes aus einem Terephthalsäurerest bestehen. Durch Modifikationen wie den Einbau von bis zu 2,5 Mol-% Metallsalze der 5-Sulfoisophthalsäure oder kurzkettigen Etherdiol-Segmenten wie Diethylenglycol wird die Hydrophilie des Copolyesters gesteigert und die Kristallinität vermindert. Hierdurch soll gemäß der WO 92/13019 ein biologischer Abbau der Copolyester ermöglicht werden. Nachteilig an diesen Copolyestern ist jedoch, daß ein biologischer Abbau durch Mikroorganismen nicht nachgewiesen wurde, sondern lediglich das Verhalten gegenüber Hydrolyse in kochendem Wasser oder in manchen Fällen auch mit Wasser von 60°C durchgeführt wurde.

Nach Angaben von Y.Tokiwa und T.Suzuki (Nature, Bd. 270, S. 76-78, 1977 oder J. of Appl. Polymer Science, Bd. 26, S. 441-448, 1981) ist davon auszugehen, daß Polyester, die weitgehend aus aromatischen Dicarbonsäure-Einheiten und aliphatischen Diolen aufgebaut sind, wie PET (Polyethylenterephthalat) und PBT (Polybutylenterephthalat), enzymatisch nicht abbaubar sind. Dies gilt auch für Copolyester, die Blöcke, aufgebaut aus aromatischen Dicarbonsäureeinheiten und aliphatischen Diolen, enthalten.

Witt et al. (Handout zu einem Poster auf dem International Workshop des Royal Institute of Technology, Stockholm, Schweden, vom 21.bis 23.04.94) beschreiben biologisch abbaubare Copolyester auf der Basis von 1,3-Propandiol, Terephthalsäureester und Adipin- oder Sebazinsäure. Nachteilig an diesen Copolyestern ist, daß daraus hergestellte Formkörper, insbesondere Folien, unzureichende mechanische Eigenschaften aufweisen.

Aufgabe der vorliegenden Erfindung war es daher, biologisch, d.h. durch Mikroorganismen, abbaubare Polymere bereitzustellen, die diese Nachteile nicht aufweisen. Insbesondere sollten die erfindungsgemäßen Polymere aus bekannten und preiswerten Monomer-bausteinen herstellbar und wasserunlöslich sein. Des weiteren sollte es möglich sein, durch spezifische Modifikatonen wie Kettenverlängerung, Einbau von hydrophilen Gruppen und verzweigend wirkenden Gruppen, maßgeschneiderte Prcdukte für die gewünschten erfindungsgemäßen Anwendungen zu erhalten. Dabei sollte, um die Zahl der Anwendungsgebiete nicht einzuschränken, der biologische Abbau durch Mikroorganismen nicht auf Kosten der mechanischen Eigenschaften erreicht werden.

Demgemäß wurden die eingangs definierten Polymere und thermoplastischen Formmassen gefunden.

Des weiteren wurden Verfahren zu deren Herstellung, deren Verwendung zur Herstellung biologisch abbaubarer Formkörper und Klebstoffe sowie biologisch abbaubare Formkörper, Schäume, Blends mit Stärke und Klebstoffe, erhältlich aus den erfindungsgemäßen Polymeren und Formmassen, gefunden.

Die erfindungsgemäßen biologisch abbaubaren Polyester Q1 sind charakterisiert durch ein Molekulargewicht (Mn) im Bereich von 6000 bis 60000, vorzugsweise von 8000 bis 50000, besonders bevorzugt von 10000 bis 40000 g/mol, durch eine Viskositätszahl im Bereich von 30 bis 350, vorzugsweise von 50 bis 300 g/ml (gemessen in o-Dichlorbenzol/Phenol (Gew.-Verhältnis 50/50) bei einer Konzentration von 0,5 Gew.% Polyester Q1 bei einer Temperatur von 25°C), und einen Schmelzpunkt im Bereich von 50 bis 170 °C, vorzugsweise von 60 bis 160 °C.

Die Polyester Q1 erhält man erfindungsgemäß, indem man eine Mischung zur Reaktion bringt, bestehend im wesentlichen aus

(a1) von 95 bis 99,9, vorzugsweise von 96 bis 99,8, besonders bevorzugt von 97 bis 99,65 Gew.-% eines Polyester P1,

(a2) von 0,1 bis 5, vorzugsweise 0,2 bis 4, besonders bevorzugt von 0,35 bis 3 Gew.-% eines Divinylethers C1 und

(a3) von 0 bis 5, vorzugsweise von 0 bis 4 mol-%, bezogen auf Komponente(b1) aus der Herstellung von P1, einer Verbindung D.

Bevorzugte Polyester P1 sind charakterisiert durch ein Molekulargewicht ($M_n$) im Bereich von 5000 bis 50000, vorzugsweise von 6000 bis 45000, besonders bevorzugt von 8000 bis 35000 g/mol, eine Viskositätszahl im Bereich von 30 bis 350, vorzugsweise von 50 bis 300 g/ml (gemessen in o-Dichlorbenzol/Phenol (Gew.-Verhältnis 50/50) bei einer Konzentration von 0,5 Gew.-% Polyester P1 bei einer Temperatur von 25°C) und einen Schmelzpunkt im Bereich von 50 bis 170, vorzugsweise von 60 bis 160°C.

Die Polyester P1 erhält man in der Regel, indem man eine Mischung, bestehend im wesentlichen aus

(b1) einer Mischung, bestehend im wesentlichen aus

35 bis 95, vorzugsweise von 45 bis 80 mol-% Adipinsäure oder esterbildende Derivate davon, insbesondere die Di-$C_1$-$C_6$-alkylester wie Dimethyl-, Diethyl-, Dipropyl-, Dibutyl-, Dipentyl- und Dihexyladipat, oder deren Mischungen, bevorzugt Adipinsäure und Dimethyladipat, oder Mischungen davon,

5 bis 65, vorzugsweise 20 bis 55 mol-%, Terephthalsäure oder esterbildende Derivate davon, insbesondere die Di-$C_1$-$C_6$-alkylester wie Dimethyl-, Diethyl-, Dipropyl-, Dibutyl-, Dipentyl- oder Dihexylterephthalat, oder deren Mischungen, bevorzugt Terephthalsäure und Dimethylterephthalat, oder Mischungen davon, und

0 bis 5, vorzugsweise von 0 bis 3, besonders bevorzugt von 0,1 bis 2 mol-% einer sulfonatgruppenhaltigen

Verbindung,

wobei die Summe der einzelnen Molprozentangaben 100 mol-% beträgt, und

(b2) einer Dihydroxyverbindung, ausgewählt aus der Gruppe bestehend aus $C_2$-$C_6$-Alkandiolen und $C_5$-$C_{10}$-Cycloalkandiolen,

wobei man das Molverhältnis von (b1) zu (b2) im Bereich von 0,4:1 bis 1,5:1, vorzugsweise von 0,6:1 bis 1,1:1 wählt, zur Reaktion bringt.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Als Dihydroxyverbindungen (b2) setzt man erfindungsgemäß eine Verbindung, ausgewählt aus der Gruppe bestehend aus $C_2$-$C_6$-Alkandiolen und $C_5$-$C_{10}$-Cycloalkandiolen, wie Ethylenglykol, 1,2-, 1,3-Propandiol, 1,2-, 1,4-Butandiol, 1,5-Pentandiol oder 1,6-Hexandiol, insbesondere Ethylenglykol, 1,3-Propandiol und 1,4-Butandiol, Cyclopentandiol, 1,4-Cyclohexandiol, :,2-Cyclohexandimethanol, 1,4-Cyclohexandimethanol, sowie Mischungen daraus, ein.

Des weiteren kann man von 0 bis 5, vorzugsweise von 0,05 bis 4 mol-%, bezogen auf die Komponente (b1), mindestens einer Verbindung D mit mindestens drei zur Esterbildung befähigten Gruppen zur Herstellung der Polyester P1 einsetzen.

Die Verbindungen D enthalten bevorzugt drei bis zehn funktionelle Gruppen, welche zur Ausbildung von Esterbindungen fähig sind. Besonders bevorzugte Verbindungen D haben drei bis sechs funktionelle Gruppen dieser Art im Molekül, insbesondere drei bis sechs Hydroxylgruppen und/oder Carboxylgruppen. Beispielhaft seien genannt:

Weinsäure, Citronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Beim Einsatz von Verbindungen D, die einen Siedepunkt unterhalb von 200°C aufweisen, kann bei der Herstellung der Polyester P1 ein Anteil vor der Reaktion aus dem Polykondensationsgemisch abdestillieren. Es ist daher bevorzugt, diese Verbindungen in einer frühen Verfahrensstufe wie der Umesterungs- bzw. Veresterungsstufe zuzusetzen, um diese Komplikation zu vermeiden und um die größtmögliche Regelmäßigkeit ihrer Verteilung innerhalb des Polykondensats zu erzielen.

Im Falle höher als 200°C siedender Verbindungen D können diese auch in einer späteren Verfahrensstufe eingesetzt werden.

Durch Zusatz der Verbindung D kann beispielsweise die Schmelzviskosität in gewünschter Weise verändert, die Schlagzähigkeit erhöht und die Kristallinität der erfindungsgemäßen Polymere bzw. Formmassen herabgesetzt werden.

Die Herstellung der biologisch abbaubaren Polyester P1 ist grundsätzlich bekannt (Sorensen und Campbell, "Preparative Methods of Polymer Chemistry", Interscience Publishers, Inc., New York, 1961, Seiten 111 bis 127; Encyl. of Polym. Science and Eng., Bd. 12, 2. Ed., John Wiley & Sons, 1988, S. 1 bis 75; Kunststoff-Handbuch, Band 3/1, Carl Hanser Verlag, München, 1992, S. 15 bis 23 (Herstellung von Polyestern); WO 92/13019; EP-A 568,593; EP-A 565,235; EP-A 28,687), so daß sich nähere Angaben hierüber erübrigen.

So kann man beispielsweise die Umsetzung von Dimethylestern der Komponente (b1) mit der Komponente (b2) ("Umesterung") bei Temperaturen im Bereich von 160 bis 230°C in der Schmelze bei Atmosphärendruck vorteilhaft unter Inertgasatmosphäre durchführen.

Vorteilhaft wird bei der Herstellung des biologisch abbaubaren Polyesters P1 ein molarer Überschuß der Komponente (b2), bezogen auf die Komponente bl, verwendet, beispielsweise bis zum 2 1/2fachen, bevorzugt bis zum 1,67fachen.

Üblicherweise erfolgt die Herstellung des biologisch abbaubaren Polyesters P1 unter Zugabe von geeigneten, an sich bekannten Katalysatoren wie Metallverbindungen auf der Basis folgender Elemente wie Ti, Ge, Zn, Fe, Mn, Co, Zr, V, Ir, La, Ce, Li, und Ca, bevorzugt metallorganische Verbindungen auf der Basis dieser Metalle wie Salze organischer Säuren, Alkoxide, Acetylacetonate und ähnliches, insbesondere bevorzugt auf Basis von Zink, Zinn und

Titan.

Bei Verwendung von Dicarbonsäuren oder deren Anhydride als Komponente (b1) kann deren Veresterung mit Komponente (b2) vor, gleichzeitig oder nach der Umesterung stattfinden. In einer bevorzugten Ausführungsform verwendet man das in der DE-A 23 26 026 beschriebene Verfahren zur Herstellung modifizierter Polyalkylenterephthalate.

Nach der Umsetzung der Komponenten (b1) und (b2) wird in der Regel unter vermindertem Druck oder in einem Inertgasstrom, beispielsweise aus Stickstoff, bei weiterem Erhitzen auf eine Temperatur im Bereich von 180 bis 260°C die Polykondensation bis zum gewünschten Molekulargewicht durchgeführt.

Um unerwünschte Abbau- und/oder Nebenreaktionen zu vermeiden, kann man in dieser Verfahrensstufe gewünschtenfalls auch Stabilisatoren zusetzen. Solche Stabilisatoren sind beispielsweise die in der EP-A 13 461, US 4,328,049 oder in B. Fortunato et al., Polymer Vol. 35, Nr. 18, S. 4006 bis 4010, 1994, Butterworth-Heinemann Ltd., beschriebene Phosphor-Verbindungen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (Vitamin E; beispielsweise als Uvinul® 2003AO (BASF) erhältlich).

Bei der Verwendung der biologisch abbaubaren Copolymere, beispielsweise im Verpackungsbereich z.B. für Nahrungsmittel, ist es in der Regel wünschenswert, den Gehalt an eingesetztem Katalysator so gering als möglich zu wählen sowie keine toxischen Verbindungen einzusetzen. Im Gegensatz zu anderen Schwermetallen wie Blei, Zinn, Antimon, Cadmium, Chrom etc. sind Titan- und Zinkverbindungen in der Regel nicht toxisch ("Sax Toxic Substance Data Book", Shizuo Fujiyama, Maruzen, K.K., 360 S. (zitiert in EP-A 565,235), siehe auch Römpp Chemie Lexikon Bd. 6, Thieme Verlag, Stuttgart, New York, 9. Auflage, 1992, S. 4626 bis 4633 und 5136 bis 5143). Beispielhaft seien genannt: Dibutoxydiacetoacetoxytitan, Tetrabutylorthotitanat und Zink(II)-acetat.

Das Gewichtsverhältnis von Katalysator zu biologisch abbaubaren Polyester P1 liegt üblicherweise im Bereich von 0,01:100 bis 3:100, vorzugsweise von 0,05:100 bis 2:100, wobei bei hochaktiven Titanverbindungen auch kleinere Mengen eingesetzt werden können wie 0,0001:100.

Der Katalysator kann gleich zu Beginn der Reaktion, unmittelbar kurz vor der Abtrennung des überschüssigen Diols oder gewünschtenfalls auch in mehreren Portionen verteilt während der Herstellung der biologisch abbaubaren Polyester P1 eingesetzt werden. Gewünschtenfalls können auch verschiedene Katalysatoren oder auch Gemische davon eingesetzt werden.

Als Divinylether C1 kann man nach bisherigen Beobachtungen alle üblichen und kommerziell erhältlichen Divinylether einsetzen. Bevorzugt setzt man Divinylether ein, die ausgewählt sind aus der Gruppe, bestehend aus 1,4-Butandiol-Divinylether, 1,6-Hexandiol-Divinylether, 1,4-Cyclohexandimethanol-Divinylether.

Die üblicherweise kationisch katalysierte Umsetzung der Polyester P1 mit dem Divinylether C1 erfolgt vorzugsweise in der Schmelze, wobei darauf zu achten ist, daß möglichst keine Nebenreaktionen auftreten, die zu einer Vernetzung oder Gelbildung führen können. In einer besonderen Ausführungsform führt man die Reaktion üblicherweise bei Temperaturen im Bereich von 90 bis 230, vorzugsweise von 100 bis 200°C durch, wobei die Zugabe des Divinylethers vorteilhaft in mehreren Portionen oder kontinuierlich erfolgt.

Gewünschtenfalls kann man die Umsetzung der Polyesters P1 mit dem Divinylether C1 auch in Gegenwart von gängigen inerten Lösemitteln wie Toluol, Methylethylketon, Tetrahydrofuran ("THF") oder Essigsäureethylester oder deren Mischungen durchführen, wobei man die Reaktionstemperatur in der Regel im Bereich von 80 bis 200, vorzugsweise von 90 bis 150°C wählt.

Die Umsetzung mit dem Divinylether C1 kann diskontinuierlich oder kontinuierlich beispielsweise in Rührkesseln, Reaktionsextrudern oder über Mischköpfe durchgeführt werden.

Man kann bei der Umsetzung der Polyester P1 mit den Divinylethern C1 auch gängige Katalysatoren einsetzen, die aus dem Stand der Technik bekannt sind (beispielsweise die in der EP-A 534,295 beschriebenen). Beispielhaft seien genannt: organische Carbonsäuren wie Oxalsäure, Weinsäure und Zitronensäure, wobei wiederum bevorzugt darauf zu achten ist, daß die eingesetzten Verbindungen möglichst nicht toxisch sind.

Obwohl das theoretische Optimum für die Reaktion von P1 mit Divinylether C1 bei einem Molverhältnis der Vinylether-Funktion zu P1-Endgruppe (bevorzugt sind Polyester P1 mit überwiegend Hydroxy-Endgruppen) von 1:1 liegt, kann die Umsetzung ohne technische Probleme auch bei Molverhältnissen von 1:3 bis 1,5:1 durchgeführt werden. Bei Molverhältnissen von >1:1 kann gewünschtenfalls während der Umsetzung oder auch nach der Umsetzung die Zugabe eines Kettenverlängerungsmittels, ausgewählt aus den Komponenten (b2), bevorzugt ein $C_2$-$C_6$-Diol, erfolgen.

Die erfindungsgemäßen biologisch abbaubaren Polymere T1 sind charakterisiert durch ein Molekulargewicht ($M_n$) im Bereich von 10000 bis 100000, vorzugsweise von 11000 bis 80000, vorzugsweise von 11000 bis 50000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T1 bei einer Temperatur von 25 °C) und einen Schmelzpunkt im Bereich von 50 bis 235, vorzugsweise von 60 bis 235°C.

Die biologisch abbaubaren Polymere T1 erhält man erfindungsgemäß, indem man einen Polyester Q2 mit

(d1) 0,1 bis 5, vorzugsweise von 0,2 bis 4, besonders bevorzugt von 0,3 bis 2,5 Gew.-%, bezogen auf den Polyester Q2, Divinylether C1 sowie mit

(d2) 0 bis 5, vorzugsweise von 0 bis 4 mol-%, bezogen auf Komponente (b1) aus der Herstellung von Polyester Q2 über den Polyester P1, Verbindung D zur Reaktion bringt.

Auf diese Weise wird üblicherweise eine Kettenverlängerung erreicht, wobei die erhaltenen polymerketten vorzugsweise eine Blockstruktur aufweisen.

Bevorzugte biologisch abbaubare Polyester Q2 sind charakterisiert durch ein Molekulargewicht ($M_n$) im Bereich von 5000 bis 100000, vorzugsweise von 8000 bis 80000, durch eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.% Polyester Q2 bei einer Temperatur von 25°C), und einen Schmelzpunkt im Bereich von 50 bis 235, vorzugsweise von 60 bis 235°C.

Die Polyester Q2 erhält man im allgemeinen, indem man eine Mischung zur Reaktion bringt, bestehend im wesentlichen aus

(c1) Polyester P1,

(c2) 0,01 bis 50, vorzugsweise von 0,1 bis 40 Gew.-%, bezogen auf (c1), Hydroxycarbonsäure B1, wobei die Hydroxycarbonsäure B1 definiert ist durch die Formeln Ia oder Ib

$$HO-[-C(O)-G-O-]_pH$$

Ia

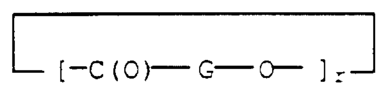

Ib

in der p eine ganze Zahl von 1 bis 1500, vorzugsweise von 1 bis 1000 und r 1, 2, 3 oder 4, vorzugsweise 1 und 2, bedeuten, und G für einen Rest steht, der ausgewählt ist aus der Gruppe bestehend aus Phenylen, $-(CH_2)_n-$, wobei n eine ganze Zahl von 1, 2, 3, 4 oder 5, vorzugsweise 1 und 5, bedeutet, $-C(R)H-$ und $-C(R)HCH_2$, wobei R für Methyl oder Ethyl steht, und

(c3) 0 bis 5, vorzugsweise von 0 bis 4 mol-%, bezogen auf Komponente (b1) aus der Herstellung von P1, Verbindung D.

In einer bevorzugten Ausführungsform setzt man als Hydroxycarbonsäure B1 ein: Glycolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4-dioxan- 2,5-dion), p-Hydroxybenzoesäure sowie Oligomere und Polymere wie 3-Polyhydroxybuttersäure, Polyhydroxyvaleriansäure, Polylactid (beispielsweise als EcoPLA® (Fa. Cargill) erhältlich) sowie eine Mischung aus 3-Polyhydroxybuttersäure und Polyhydroxyvaleriansäure (letzteres ist unter dem Namen Biopol® von Zeneca erhältlich).

Die Umsetzung der Polyester P1 mit der Hydroxycarbonsäure B1 gewünschtenfalls in Gegenwart der Verbindung D erfolgt vorzugsweise in der Schmelze bei Temperaturen im Bereich von 120 bis 260°C unter Inertgasatmosphäre, gewünschtenfalls auch unter vermindertem Druck. Man kann sowohl diskontinuierlich als auch kontinuierlich, beispielsweise in Rührkesseln oder (Reaktions-)Extrudern, arbeiten.

Die Umsetzung kann gewünschtenfalls durch Zugabe an sich bekannter Umesterungskatalysatoren (siehe die weiter oben bei der Herstellung der Polyester P1 beschriebenen) beschleunigt werden.

Eine bevorzugte Ausführungsform betrifft Polyester Q2 mit Blockstrukturen gebildet aus den Komponenten P1 und B1: bei Verwendung cyclischer Derivate von B1 (Verbindungen Ib) können bei der Umsetzung mit dem biologisch abbaubaren Polyester P1 durch eine sogenannte "ringöffnende Polymerisation", ausgelöst durch die Endgruppen von P1, in an sich bekannter Weise Polyester Q2 mit Blockstrukuren erhalten werden (zur "ringöffnenden Polymerisation" siehe Encycl. of Polym. Science and Eng. Bd. 12, 2.Ed., John Wiley & Sons, 1988, S. 36 bis 41). Die Reaktion kann man gewünschtenfalls unter Zusatz üblicher Katalysatoren wie den bereits weiter oben beschriebenen Umesterungskatalysatoren durchführen, insbesondere bevorzugt ist Zinn-octanoat (siehe auch Encycl. of Polym. Science and Eng. Bd. 12, 2.Ed., John Wiley & Sons, 1988, S. 36 bis 41).

Bei Verwendung von Komponenten B1 mit höheren Molekulargewichten, beispielsweise mit einem p von größer als 10 (zehn), können durch Umsetzung mit den Polyestern P1 in Rührkesseln oder Extrudern, die gewünschten

Blockstrukturen durch die Wahl der Reaktionsbedingungen wie Temperatur, Verweilzeit, Zusatz von Umesterungskatalysatoren wie den oben genannten erhalten werden. So ist aus J. of Appl. Polym. Sci., Vol. 32, S. 6191 bis 6207, John Wiley & Sons, 1986 sowie aus Makromol. Chemie, Vol. 136, s. 311 bis 313, 1970 bekannt, daß bei der Umsetzung von Polyestern in der Schmelze aus einem Blend durch Umesterungsreaktionen zunächst Blockcopolymere und dann statistische Copolymere erhalten werden können.

Die Herstellung der Polymere T1 erfolgt in der Regel analog zur Herstellung der Polyester Q1.

Die erfindungsgemäßen biologisch abbaubaren Polymere T2 sind charakterisiert durch ein Molekulargewicht ($M_n$) im Bereich von 10000 bis 100000, vorzugsweise von 11000 bis 80000, besonders bevorzugt von 11000 bis 50000 g/mol, eine Viskositätszahl im Bereich von 30 bis 450, vorzugsweise von 50 bis 400 g/ml (gemessen in 0-Dichlorbenzol/Phenol (Gew.-Verhältnis 50/50) bei einer Konzentration von 0,5 Gew.-% Polymer T2 bei einer Temperatur von 25 °C) und einen Schmelzpunkt im Bereich von 50 bis 235, vorzugsweise von 60 bis 235°C.

Die biologisch abbaubaren Polymere T2 erhält man erfindungsgemäß durch Umsetzung des Polyesters Q1 mit

(e1) 0,01 bis 50, vorzugsweise von 0,1 bis 40 Gew.-%, bezogen auf den Polyester Q1, der Hydroxycarbonsäure B1 sowie mit

(e2) 0 bis 5, vorzugsweise von 0 bis 4 mol-%, bezogen auf Komponente (b1) aus der Herstellung von Polyester Q1 über den Polyester P1, Verbindung D,

wobei man zweckmäßig analog zur Umsetzung von Polyester P1 mit Hydroxycarbonsäure B1 zum Polyester Q2 verfährt.

Die erfindungsgemäßen biologisch abbaubaren Polymere T3 sind charakterisiert durch ein Molekulargewicht ($M_n$) im Bereich von 10000 bis 100000, vorzugsweise von 11000 bis 80000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T3 bei einer Temperatur von 25 °C) und einem Schmelzpunkt im Bereich von 50 bis 235, vorzugsweise von 60 bis 235°C.

Die biologisch abbaubaren Polymere T3 erhält man erfindungsgemäß, indem man (f1) Polyester P2, oder (f2) einer Mischung bestehend im wesentlichen aus Polyester P1 und 0,01 bis 50, vorzugsweise von 0,1 bis 40 Gew.-%, bezogen auf den Polyester P1, Hydroxycarbonsäure B1, oder (f3) einer Mischung, bestehend im wesentlichen aus Polyestern P1, die eine unterschiedliche Zusammensetzung voneinander aufweisen, mit

0,1 bis 5, vorzugsweise von 0,2 bis 4, besonders bevorzugt von 0,3 bis 2,5 Gew.-%, bezogen auf die Menge der eingesetzten Polyester, Divinylether C1 sowie

mit 0 bis 5, vorzugsweise von 0 bis 4 mol-%, bezogen auf die jeweiligen Molmengen an Komponente (b1), die zur Herstellung der eingesetzten Polyester (f1) bis (f3) eingesetzt wurden, Verbindung D, zur Reaktion bringt, wobei man die Umsetzungen zweckmäßig analog zur Herstellung der Polyester Q1 aus den Polyestern P1 und den Divinylethern C1 vornimmt.

Bevorzugte biologisch abbaubare Polyester P2 sind charakterisiert durch ein Molekulargewicht ($M_n$) im Bereich von 5000 bis 80000, vorzugsweise von 6000 bis 45000, besonders vorzugsweise von 10000 bis 40000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polyester P2 bei einer Temperatur von 25°C) und einen Schmelzpunkt im Bereich von 50 bis 235, vorzugsweise von 60 bis 235°C aufweisen.

Die biologisch abbaubaren Polyester P2 erhält man im allgemeinen, indem man eine Mischung zur Reaktion bringt, bestehend im wesentlichen aus

(g1) einer Mischung, bestehend im wesentlichen aus

20 bis 95, bevorzugt von 25 bis 80, besonders bevorzugt von 30 bis 70 mol-% Adipinsäure oder esterbildende Derivate davon oder Mischungen davon,

5 bis 80, bevorzugt von 20 bis 75, besonders bevorzugt von 30 bis 70 mol-% Terephthalsäure oder esterbildende Derivate davon oder Mischungen davon, und

0 bis 5, bevorzugt von 0 bis 3, besonders bevorzugt von 0,1 bis 2 mol-% einer sulfonatgruppenhaltigen Verbindung,

wobei die Summe der einzelnen Molprozentangaben 100 mol-% beträgt,

(g2) Dihydroxyverbindung (b2),
wobei man das Molverhältnis von (g1) zu (g2) im Bereich von 0,4:1 bis 1,5:1, vorzugsweise von 0,6:1 bis 1,1:1 wählt,

(g3) von 0,01 bis 100, vorzugsweise von 0,1 bis 80 Gew.-%, bezogen auf Komponente (g1), einer Hydroxycarbcnsäure B1, und

(g4) von 0 bis 5, vorzugsweise von 0 bis 4, besonders bevorzugt von 0,01 bis 3,5 mol-%, bezogen auf Komponente (g1), Verbindung D.

Besonders bevorzugt für die Herstellung von Polyester P2 sind die niedermolekularen und cyclischen Derivate der Hydroxycarbonsäure B1.
Die Herstellung der biologisch abbaubaren Polyester P2 erfolgt zweckmäßig analog zur Herstellung der Polyester P1, wobei die Zugabe der Hydroxycarbonsäure B1 sowohl zu Anfang der Umsetzung als auch nach der Veresterungs- bzw. Umesterungsstufe erfolgen kann.
In einer bevorzugten Ausführungsform setzt man Polyester P2 ein, deren wiederkehrende Einheiten statistisch im Molekül verteilt sind.
Man kann jedoch auch Polyester P2 einsetzen, deren Polymerketten Blockstrukturen aufweisen. Solche Polyester P2 sind im allgemeinen zugänglich durch entsprechende Wahl, insbesondere des Molekulargewichts, der Hydroxycarbonsäure B1. So erfolgt nach bisherigen Beobachtungen im allgemeinen bei Verwendung einer hochmolekularen Hydroxycarbonsäure B1, insbesondere mit einem p von größer als 10, nur eine unvollständige Umesterung, beispielsweise auch in Gegenwart der oben beschriebenen Deaktivatoren (siehe J.of Appl. Polym. Sc. Vol. 32, S. 6191 bis 6207, John Wiley & Sons, 1986, und Makrom. Chemie, Vol. 136, S. 311 bis 313, 1970). Gewünschtenfalls kann man die Umsetzung auch in Lösung mit den bei der Herstellung der Polymeren T1 aus den Polyestern Q2 und den Divinylethern C1 genannten Lösungsmitteln durchführen.
Die biologisch abbaubaren thermoplastischen Formmassen T4 erhält man erfindungsgemäß, indem man in an sich bekannter Weise, bevorzugt unter Zusatz üblicher Additive wie Stabilisatoren, Verarbeitungshilfsmitteln, Füllstoffen etc. (siehe J. of Appl. Polym. Sc., Vol. 32, S. 6191 bis 6207, John Wiley & Sons, 1986; WO 92/0441; EP 515,203; Kunststoff-Handbuch, Bd. 3/1, Carl Hanser Verlag München, 1992, S. 24 bis 28)

(h1) 99,5 bis 0,5 Gew.-% Polyester Q1 mit

(h2) 0,5 bis 99,5 Gew.-% Hydroxycarbonsäure B1 mischt.

In einer bevorzugten Ausführungsform setzt man hochmolekulare Hydroxycarbonsäuren B1 wie Polycaprolacton oder Polylactid (z.B. EcoPLA®) oder Polyglykolid oder Polyhydroxyalkanoate wie 3-Polyhydroxybuttersäure, Polyhydroxyvaleriansäure sowie eine Mischung aus 3-Polyhydroxybuttersäure und Polyhydroxyvaleriansäure (z.B. Biopol®) mit einem Molekulargewicht ($M_n$) im Bereich von 10000 bis 150000, vorzugsweise von 10000 bis 100000 g/mol ein.
Aus WO 92/0441 und EP-A 515,203 ist es bekannt, daß hochmolekulares Polylactid ohne Zusätze von Weichmachern für die meisten Anwendungen zu spröde ist. In einer bevorzugten Ausführungsform kann man ein Blend ausgehend von 0,5 bis 20, vorzugsweise von 0,5 bis 10 Gew.-% Polyester und 99,5 bis 80, vorzugsweise von 99,5 bis 90 Gew.-% Polylactid herstellen, das eine deutliche Verbesserung der mechanischen Eigenschaften, beispielsweise eine Erhöhung der Schlagzähigkeit, gegenüber reinem Polylactid aufweist.
Eine weitere bevorzugte Ausführungsform betrifft ein Blend, erhältlich durch Mischen von 99,5 bis 40, vorzugsweise von 99,5 bis 60 Gew.-% Polyester Q1 und von 0,5 bis 60, vorzugsweise von 0,5 bis 40 Gew.-% einer hochmolekularen Hydroxycarbonsäure B1, besonders bevorzugt Polylactid, Polyglycolid, Polycaprolacton und Piolyhydroxybuttersäure. Solche Blends können vollständig biologisch abgebaut werden und weisen nach den bisherigen Beobachtungen sehr gute mechanische Eigenschaften auf.
Nach bisherigen Beobachtungen erhält man die erfindungsgemäßen thermoplastischen Formmassen T4 bevorzugt dadurch, daß man kurze Mischzeiten einhält, beispielsweise bei einer Durchführung des Mischens in einem Extruder. Durch Wahl der Mischparameter, insbesondere der Mischzeit und gewünschtenfalls der Verwendung von Deaktivatoren, sind auch Formmassen zugänglich, die überwiegend Blendstrukturen aufweisen, d.h., daß der Mischvorgang so gesteuert werden kann, daß zumindest teilweise auch Umesterungsreaktionen stattfinden können.
In einer weiteren bevorzugten Ausführungsform kann man 0 bis 50, vorzugsweise 0 bis 30 Mol-% der Adipinsäure, oder ihrer esterbildende Derivate oder deren Mischungen, durch mindestens eine andere aliphatische $C_4$-

$C_{10}$- oder cycloaliphatische $C_5$-$C_{10}$-Dicarbonsäure oder Dimerfettsäure wie Bernsteinsäure, Glutarsäure, Pimelinsäure, Korksäure, Azelainsäure oder Sebazinsäure oder ein Esterderivat wie deren Di-$C_1$-$C_6$-alkylester oder deren Anhydride wie Bernsteinsäureanhydrid, oder deren Mischungen, ersetzen, bevorzugt Bernsteinsäure, Bernsteinsäureanhydrid, Sebacinsäure, Dimerfettsäure und Di-$C_1$-$C_6$-alkylester wie Dimethyl-, Diethyl-, Di-n-propyl-, Diisobutyl-, Di-n-pentyl-, Dineopentyl-, Di-n-hexylester davon, insbesondere Dimethylbernsteinsäureester.

Eine besonders bevorzugte Ausführungsform betrifft den Einsatz als Komponente (b1) die in der EP-A 7445 beschriebene Mischung aus Bernsteinsäure, Adipinsäure und Glutarsäure sowie deren $C_1$-$C_6$-Alkylester, insbesondere der Dimethylester und Diisobutylester.

In einer weiteren bevorzugten Ausführungsform kann man 0 bis 50, vorzugsweise 0 bis 40 Mol-% der Terephthalsäure oder ihrer esterbildende Derivate, oder deren Mischungen durch mindestens eine andere aromatische Dicarbonsäure wie Isophthalsäure, Phthalsäure oder 2,6-Naphthalindicarbonsäure, bevorzugt Isophthalsäure, oder ein Esterderivat wie einen Di-$C_1$-$C_6$-alkylester, insbesondere den Dimethylester, oder deren Mischungen, ersetzen.

Allgemein sei angemerkt, daß man die unterschiedlichen erfindungsgemäßen Polymere wie üblich aufarbeiten kann, indem man die Polymere isoliert, oder, insbesondere, wenn man die Polyester P1, P2, Q2 und Q1 weiter umsetzen möchte, indem man die Polymere nicht isoliert, sondern gleich weiterverarbeitet.

Die erfindungsgemäßen Polymere kann man durch Walzen, Streichen, Spritzen oder Gießen auf Beschichtungsunterlagen aufbringen. Bevorzugte Beschichtungsunterlagen sind solche, die kompostierbar sind oder verrotten wie Formkörper aus Papier, Cellulose oder Stärke.

Die erfindungsgemäßen Polymere können außerdem zur Herstellung von Formkörpern verwendet werden, die kompostierbar sind. Als Formkörper seien beispielhaft genannt: Wegwerfgegenstände wie Geschirr, Besteck, Müllsäcke, Folien für die Landwirtschaft zur Ernteverfrühung, Verpackungsfolien und Gefäße für die Anzucht von Pflanzen.

Des weiteren kann man die erfindungsgemäßen Polymere in an sich bekannter Weise zu Fäden verspinnen. Die Fäden kann man gewünschtenfalls nach üblichen Methoden verstrecken, streckzwirnen, streckspulen, streckschären, streckschlichten und strecktexturieren. Die Verstreckung zu sogenanntem Glattgarn kann dabei in ein und demselben Arbeitsgang (fully drawn yarn oder fully oriented yarn), oder in einem getrennten Arbeitsgang erfolgen. Das Streckschären, Streckschlichten und die Strecktexturierung führt man im allgemeinen in einem vom Spinnen getrennten Arbeitsgang durch. Die Fäden kann man in an sich bekannter Weise zu Fasern weiterverarbeiten. Aus den Fasern sind dann Flächengebilde durch Weben, Wirken oder Stricken zugänglich.

Die oben beschriebenen Formkörper, Beschichtungsmittel und Fäden etc. können gewünschtenfalls auch Füllstoffe enthalten, die man während des Polymerisationsvorganges in irgendeiner Stufe oder nachträglich, beispielsweise in eine Schmelze der erfindungsgemäßen Polymere einarbeiten kann.

Bezogen auf die erfindungsgemäßen Polymere kann von 0 bis 80 Gew.-% Füllstoffe zusetzen. Geeignete Füllstoffe sind beispielsweise Ruß, Stärke, Ligninpulver, Cellulosefasern, Naturfasern wie Sisal und Hanf, Eisenoxide, Tonmineralien, Erze, Calciumcarbonat, Calciumsulfat Bariumsulfat und Titandioxid. Die Füllstoffe können zum Teil auch Stabilisatoren wie Tocopherol (Vitamin E), organische Phosphorverbindungen, Mono-, Di- und Polyphenole, Hydrochinone, Diarylamine, Thioether, UV-Stabilisatoren, Nukleierungsmittel wie Talkum sowie Gleit- und Formtrennmittel auf Basis von Kohlenwasserstoffen, Fettalkoholen, höheren Carbonsäuren, Metallsalzen höherer Carbonsäuren wie Calcium- und Zinkstearat, und Montanwachsen enthalten. Solche Stabilisatoren etc. sind in Kunststoff-Handbuch, Bd. 3/1, Carl Hanser Verlag, München, 1992, S. 24 bis 28 ausführlich beschrieben.

Die erfindungsgemäßen Polymere können außerdem durch den Zusatz von organischen oder anorganischen Farbstoffen beliebig eingefärbt werden. Die Farbstoffe können im weitesten Sinne auch als Füllstoff angesehen werden.

Ein besonderes Anwendungsgebiet der erfindungsgemäßen Polymere betrifft die Verwendung als kompostierbare Folie oder einer kompostierbaren Beschichtung als Außenlage von Windeln. Die Außenlage der Windeln verhindert wirksam den Durchtritt von Flüssigkeiten, die im Innern der Windel vom Fluff und Superabsorbern, bevorzugt von bioabbaubaren Superabsorbern, beispielsweise auf Basis von vernetzter Polyacrylsäure oder vernetztem Polyacrylamid, absorbiert werden. Als Innenlage der Windel kann man ein Faservlies aus einem Cellulosematerial verwenden. Die Außenlage der beschriebenen Windeln ist biologisch abbaubar und damit kompostierbar. Sie zerfällt beim Kompostieren, so daß die gesamte Windel verrottet, während mit einer Außenlage aus beispielsweise Polyethylen versehene Windeln nicht ohne vorherige Zerkleinerung oder aufwendige Abtrennung der Polyethylenfolie kompostiert werden können.

Eine weitere bevorzugte Verwendung der erfindungsgemäßen Polymere und Formmassen betrifft die Herstellung von Klebstoffen in an sich bekannter Weise (siehe beispielsweise Encycl. of Polym. Sc. and Eng. Vol.1, "Adhesive Compositions", S. 547 bis 577). Analog zur Lehre der EP-A 21042 kann man die erfindungsgemäßen Polymere und Formmassen auch mit geeigneten klebrigmachenden thermoplastischen Harzen, bevorzugt Naturharzen, nach dort beschriebenen Methoden verarbeiten. Analog zur Lehre der DE-A 4,234,305 kann man die erfindungsgemäßen Polymere und Formmassen auch zu lösungsmittelfreien Klebstoffsystemen wie Hot-melt-Folien weiterverarbeiten.

Ein weiteres bevorzugtes Anwendungsgebiet betrifft die Herstellung vollständig abbaubarer Blends mit Stärkemischungen (bevorzugt mit thermoplastischer Stärke wie in der WO 90/05161 beschrieben) analog zu dem in der

DE-A 42 37 535 beschriebenen Verfahren. Die erfindungsgemäßen Polymere und thermoplastischen Formmassen lassen sich nach bisherigen Beobachtungen auf Grund ihrer hydrophoben Natur, ihren mechanischen Eigenschaften, ihrer vollständigen Bioabbaubarkeit, ihrer guten Verträglichkeit mit thermoplastischer Stärke und nicht zuletzt wegen ihrer günstigen Rohstoffbasis vorteilhaft als synthetische Blendkomponente einsetzen.

Weitere Anwendungsgebiete betreffen beispielsweise die Verwendung der erfindungsgemäßen Polymere in landwirtschaftlichem Mulch, Verpackungsmaterial für Saatgut und Nährstoffe, Substrat in Klebefolien, Babyhöschen, Taschen, Bettücher, Flaschen, Kartons, Staubbeutel, Etiketten, Kissenbezüge, Schutzkleidung, Hygieneartikel, Taschentücher, Spielzeug und Wischer.

Eine weitere Verwendung der erfindungsgemäßen Polymere und Formmassen betrifft die Herstellung von Schäumen, wobei man im allgemeinen nach an sich bekannten Methoden vorgeht (siehe EP-A 372,846; Handbook of Polymeric foams and Foam Technology, Hanser Publisher, München, 1991, S. 375 bis 408). Üblicherweise wird dabei das erfindungsgemäße Polymere bzw. Formmasse zunächst aufgeschmolzen, gewünschtenfalls unter Zugabe von bis zu 5 Gew.-% Verbindung D, bevorzugt Pyromellitsäuredianhydrid und Trimellitsäureanhydrid, dann mit einem Treibmittel versetzt und die so erhaltene Mischung durch Extrusion vermindertem Druck ausgesetzt, wobei die Schäumung entsteht.

Die Vorteile der erfindungsgemäßen Polymere gegenüber bekannten bioabbaubaren Polymere liegen in einer günstigen Rohstoffbasis mit gut verfügbaren Ausgangsstoffen wie Adipinsäure, Terephthalsäure und gängigen Diolen, in interessanten mechanischen Eigenschaften durch Kombination von "harten" (durch die aromatischen Dicarbonsäuren wie beispielsweise Terephthalsäure) und "weichen" (durch die aliphatischen Dicarbonsäuren, wie beispielsweise Adipinsäure) Segmenten in der Polymerkette und der Variation der Anwendungen durch einfache Modifizierungen, in einem guten Abbauverhalten durch Mikroorganismen, besonders im Kompost und im Boden, und in einer gewissen Resistenz gegenüber Mikroorganismen in wäßrigen Systemen bei Raumtemperatur, was für viele Anwendungsbereiche besonders vorteilhaft ist. Durch den statistischen Einbau der aromatischen Dicarbonsäuren der Komponenten (b1) in verschiedenen Polymeren wird der biologische Angriff ermöglicht und damit die gewünschte biologische Abbaubarkeit erreicht.

Besonders vorteilhaft an den erfindungsgemäßen Polymere ist, daß durch maßgeschneiderte Rezepturen sowohl biologisches Abbauverhalten und mechanische Eigenschaften für den jeweiligen Anwendungszweck optimiert werden können.

Des weiteren können je nach Herstellverfahren vorteilhaft Polymere mit überwiegend statistisch verteilten Monomerbausteinen, Polymere mit überwiegend Blockstrukturen sowie Polymere mit überwiegend Blendstruktur oder Blends erhalten werden.

Beispiele

Enzym-Test

Die Polymere wurden in einer Mühle mit flüssigem Stickstoff oder Trockeneis gekühlt und fein gemahlen (je größer die Oberfläche des Mahlguts, desto schneller der enzymatische Abbau). Zur eigentlichen Durchführung des Enzym-Tests wurden 30 mg fein gemahlenes Polymerpulver und 2 ml einer 20 mmol wäßrigen $K_2HPO_4$/ $KH_2PO_4$-Pufferlösung (pH-Wert: 7,0) in ein Eppendorfreagenzgefäß (2 ml) gegeben und 3 h bei 37°C auf einem Schwenker equilibriert Anschließend wurden 100 units Lipase aus entweder Rhizopus arrhizus, Rhizopus delemar oder Pseudomonas pl. zugesetzt und 16 h bei 37°C unter Rühren (250 rpm) auf dem Schwenker inkubiert. Danach wurde die Reaktionsmischung durch eine Millipore®-Membran (0,45 µm) filtriert und der DOC (dissolved organic carbon) des Filtrats gemessen. Analog dazu wurden je eine DOC-Messung nur mit Puffer und Enzym (als Enzymkontrolle) und eine nur mit Puffer und Probe (als Blindwert) durchgeführt.

Die ermittelten ΔDOC-Werte (DOC(Probe + Enzym)-DOC(Enzymkontrolle)-DOC(blindwert)) können als Maß für die enzymatische Abbaubarkeit der Proben angesehen werden. Sie sind jeweils im Vergleich zu einer Messung mit Pulver von Polycaprolacton® Tone P 787 (Union Carbide) dargestellt. Bei der Bewertung ist darauf zu achten, daß es sich nicht um absolut quantifizierbare Daten handelt. Auf den Zusammenhang zwischen Oberfläche des Mahlguts und Schnelligkeit des enzymatischen Abbaus wurde weiter oben bereits hingewiesen. Des weiteren können auch die Enzymaktivitäten schwanken.

Die Molekulargewichte wurden mittels Gelpermeationschromatographie (GPC) gemessen:

| | |
|---|---|
| stationäre Phase: | 5 MIXED B-Polystyrolgelsäulen (7,5x300 mm, PL-gel 10 µ) der Fa. Polymer Laboratories; Temperierung: 35°C. |
| mobile Phase: | Tetrahydrofuran (Fluß: 1,2 ml/min) |

Eichung: Molgewicht 500-10000000 g/mol mit PS-Eichkit der Fa. Polymer Laboratories.

Im Oligomerbereich Ethylbenzol/1,3-Diphenylbutan/1,3,5-Triphenylhexan/1,3,5,7-Tetraphenyloktan/ 1,3,5,7,9-Pentaphenyldekan

Detektion: RI (Brechungsindex) Waters 410
UV (bei 254 nm) Spectra Physics 100

Die Bestimmungen der Hydroxyl-Zahl (OH-Zahl) und Säure-Zahl (SZ) erfolgten nach folgenden Methoden:

(a) Bestimmung der scheinbaren Hydroxyl-Zahl
Zu ca. 1 bis 2 g exakt einqewogener Prüfsubßtanz wurden 10 ml Toluol und 9,8 ml Acetylierungsreagenz (s.u.) gegeben und 1 h bei 95°C unter Rühren erhitzt. Danach wurden 5 ml dest.
Wasser zugeführt. Nach Abkühlen auf Raumtemperatur wurden 50 ml Tetrahydrofuran (THF) zugesetzt und mit ethanolischer KOH-Maßlösung gegen Wendepunkt potentiographisch titriert.

Der Versuch wurde ohne Prüfsubstanz wiederholt (Blindprobe).

Die scheinbare OH-Zahl wurde dann aufgrund folgender Formel ermittelt:
scheinb. OH-Zahl $c \cdot t \cdot 56{,}1 \cdot (V2 - V1)/m$ (in mg KOH/g)
wobei

c = Stoffmengenkonzentration der ethanol. KOH-Maßlösung in mol/l,
t = Titer der ethanol. KOH-Maßlösung
m = Einwaage in mg der Prüfsubstanz
V1 = Verbrauch der Maßlösung mit Prüfsubstanz in ml
V2 = Verbrauch der Maßlösung ohne Prügsubstanz in ml

bedeuten.

Verwendete Reagenzien:

ethanol. KOH-Maßlösung, c = 0,5 mol/l, Titer 0,9933 (Merck, Art.Nr. 1.09114)
Essigsäureanhydrid p.A. (Merck, Art.Nr. 42)
Pyridin p.A. (Riedel de Haen, Art.-Nr 33638)
Essigsäure p.A. (Merck, Art.Nr. 1.00063)
Acetylierungsreagenz: 810 ml Pyridin, 100 ml Essigsäureanhydrid und 9 ml Essigsäure
Wasser, deionisiert
THF und Toluol

(b) Bestimmung der Säurezahl (SZ)
Ca. 1 bis 1,5 g Prüfsubstanz wurden exakt eingewogen und mit 10 ml Toluol und 10 ml Pyridin versetzt und anschließend auf 95°C erhitzt. Nach dem Lösen wurde auf Raumtemperatur abgekühlt, 5 ml Wasser und 50 ml THF zugegeben und mit 0,1 N ethanol. KoHmaßlösung titriert.

Die Bestimmung wurde ohne Prüfsubstanz wiederholt (Blindprobe)

Die Säure-Zahl wurde dann aufgrund folgender Formel ermittelt:

$$SZ = c \cdot t \cdot 56{,}1 \cdot (V1 - V2)/m \qquad \text{(in mg KOH/g)}$$

wobei

c =Stoffmengenkonzentration der ethanol. KOH-Maßlösung in mol/l,
t = Titer der ethanol. KOH-Maßlösung
m = Einwaage in mg der Prüfsubstanz
V1 = Verbrauch der Maßlösung mit Prüfsbstanz in ml
V2 = Verbrauch der Maßlösung ohne Prüfsubstanz in ml

bedeuten.

Verwendete Reagenzien:

ethanol. KOH-Maßlösung, c = 0,1 mol/l, Titer = 0,9913 (Merck, Art.Nr. 9115)
Pyridin p.A. (Riedel de Haen, Art.Nr. 33638)
Wasser, deionisiert
THF und Toluol

(c) Bestimmung der OH-Zahl
Die OH-Zahl ergibt sich aus der Summe der scheinbaren OH-Zahl und der SZ:
OH-Zahl = scheinb. OH-Zahl + SZ
Verwendete Abkürzungen:

| | |
|---|---|
| DOC: | dissolved organic carbon |
| DMT: | Dimethylterephthalat |
| PCL: | Polycaprolacton® Tone P 787 (Union Carbide) |
| PMDA: | Pyromellitsäuredianhydrid |
| SZ: | Säurezahl |
| TBOT: | Tetrabutylorthotitanat |
| VZ: | Viskositätszahl (gemessen in o-Dichlorbenzol/Phenol (Gew.-Verhältnis 50/50) bei einer Konzentration von 0,5 Gew.-% Polymer bei einer Temperatur von 25°C |
| $T_m$: | "Schmelztemperatur" = Temperatur, bei der ein maximaler endothermer Wärmefluß auftritt (Extremum der DSC-Kurven) |
| $T_g$: | Glasübergangstemperatur (midpoint der DSC-Kurven) |

Die DSC-Messungen wurden mit einem DSC-Gerät 912+Thermal Analyzer 990 der Fa. DuPont durchgeführt. Die Temperatur- und Enthalpiekalibrierung erfolgte in üblicher Weise. Die Probeneinwaage betrug typischerweise 13 mg. Heiz- und Kühlraten betrugen - außer wenn anders vermerkt - 20 K/min. Die Proben wurden unter folgenden Bedingungen vermessen: 1. Aufheizender Lauf an Proben im Anlieferungszustand, 2. Schnelles Abkühlen aus der Schmelze, 3. Aufheizender Lauf an aus der Schmelze abgekühlten Proben (Proben aus 2). Die jeweils zweiten DSC-Läufe dienten dazu, nach Einprägen einer einheitlichen thermischen Vorgeschichte, einen Vergleich zwischen den verschiedenen Proben zu ermöglichen.

Beispiel 1 - Herstellung eines Polyesters P1

(a) 4672 kg 1,4 Butandiol, 7000 kg Adipinsäure und 50 g Zinndioctoat wurden in einer Stickstoffatmosphäre bei einer Temperatur im Bereich von 230 bis 240°C zur Reaktion gebracht. Nach Abdestillieren der Hauptmenge des bei der Umsetzung gebildeten Wassers, wurden 10 g TBOT zur Reaktionsmischung gegeben. Nachdem die Säurezahl unter den Wert 1 gesunken ist, wurde unter vermindertem Druck überschüssiges 1,4-Butandiol solange abdestilliert, bis eine OH-Zahl von 56 erreicht war.

(b) 362 g des Polyesters aus Bsp. 1a, 234 g DMT, 340 g 1,4-Butandiol und 1 g TBOT wurden in einen Dreihalskolben gegeben und unter Stickstoffatmosphäre mit langsamen Rühren auf 180°C erhitzt. Dabei wurde das während der Umesterungsreaktion gebildete Methanol abdestilliert. Innerhalb von 2 h wurde unter Erhöhung der Rührgeschwindigkeit auf 230°C erhitzt und nach einer weiteren Stunde noch 0,4 g 50 gew.-%ige wäßrige phosphorige Säure zugegeben. Innerhalb von 1 h wurde der Druck auf 5 mbar abgesenkt und bei 240°C noch 1 h < 2 mbar gehalten, wobei das im Überschuß eingesetzte 1,4-Butandiol abdestillierte.

| | |
|---|---|
| OH-Zahl: | 13 mg KOH/g |
| SZ-Zahl: | <1 mg KOH/g |
| VZ: | 58 g/ml |

GPC: (UV-Detektion, 200-300.000 MG-Bereich)
Mn: 11600/Mw: 29892 (g/mol)
$T_m$: 88°C (DSC, Anlieferungszustand), $T_g$: -42°C

Beispiel 2 - Herstellung eines Polyesters Q1

300 g des Produktes aus Bsp. 1b wurden auf 170°C abgekühlt und 4,3 g 1,4-Butandioldivinylether in 4 Portionen innerhalb von 1 h zugegeben. Durch diese Kettenverlängerung wurde das Molekulargewicht erhöht (s. GPC-Werte), was zu einer deutlichen Erhöhung der Schmelzviskosität führte.
GPC: (UV, 300-800.000 MG-Bereich) Mn: 15793/Mw:60459 (g/mol)

Beispiel 3 - Herstellung eines Polyesters Q1

360,4 g des Polyesters aus Bsp. 1a, 227,2 g DMT, 340 g 1,4-Butandiol, 6,5 g Pyromellitsäuredianhydrid, 1,0 g TBOT und 0,4 g 50 gew.-%ige wäßrige phosphorige Säure wurden analog zu Bsp. 2 umgesetzt, wobei die Zugabe von PMDA bereits zu Anfang der Umsetzung erfolgte.

OH: 19 mg KOH/g
SZ: 1,1 mg KOH/g
VZ: 80,1 g/ml
$T_m$: 89°C, $T_g$: -43°C (DSC, Anlieferungszustand)

Dann wurden 300 g der Schmelze auf 170CC abgekühlt und 2,06 g 1,4-Butandioldivinylether in 4 Portionen innerhalb von 1 h zugegeben. Durch diese Kettenverlängerung wurde das Molekulargewicht erhöht (s. GPC-Werte), was zu einer deutlichen Erhöhung der Schmelzviskosität führte.
GPC: (UV, 300-800.000 MG-Bereich) Mn: 10954/Mw: 164.250 (g/mol)
Enzym-Test mit Rhizopus arrhizus, Δ DOC: 700 mg/l
zum Vergleich mit PCL: Δ DOC: 3240 mg/l.

**Patentansprüche**

1. Biologisch abbaubare Polyester Q1 mit einem Molekulargewicht ($M_n$) im Bereich von 6000 bis 60000 g/mol, einer Viskositätszahl im Bereich von 30 bis 350 g/ml (gemessen in o-Dichlorbenzol/Phenol (Gew.-Verhältnis 50/50) bei einer Konzentration von 0,5 Gew.-% Polyester Q1 bei einer Temperatur von 25°C) und einem Schmelzpunkt im Bereich von 50 bis 170°C, erhältlich durch Reaktion einer Mischung bestehend im wesentlichen aus

    (a1) von 95 bis 99,9 Gew.-% eines Polyesters P1, erhältlich durch Reaktion einer Mischung, bestehend im wesentlichen aus

        (b1) einer Mischung, bestehend im wesentlichen aus

            35 bis 95 mol-% Adipinsäure oder esterbildende Derivate davon oder Mischungen davon,

            5 bis 65 mol-% Terephthalsäure oder esterbildende Derivate davon oder Mischungen davon, und

            0 bis 5 mol-% einer sulfonatgruppenhaltigen Verbindung, wobei die Summe der einzelnen Molprozentangaben 100 mol-% beträgt, und

        (b2) einer Dihydroxyverbindung, ausgewählt aus der Gruppe bestehend aus $C_2$-$C_6$-Alkandiolen und $C_5$-$C_{10}$-Cycloalkandiolen, wobei man das Molverhältnis von (b1) zu (b2) im Bereich von 0,4:1 bis 1,5:1 wählt,

    mit der Maßgabe, daß die Polyester P1 ein Molekulargewicht ($M_n$) im Bereich von 5000 bis 50000 g/mol, eine Viskositätszahl im Bereich von 30 bis 350 g/ml (gemessen in o-Dichlorbenzol/Phenol (Gew.-Verhältnis 50/50) bei einer Konzentration von 0,5 Gew.-% Polyester P1 bei einer Temperatur von 25°C) und einen Schmelzpunkt im Bereich von 50 bis 170°C aufweisen, und mit der weiteren Maßgabe, daß man von 0 bis 5 mol-%, bezogen auf die Molmenge der eingesetzten Komponente (b1), einer Verbindung D mit drei bis sechs Hydroxyl- und/oder Carboxygruppen zur Herstellung der Polyester P1 einsetzt,

    (a2) von 0,1 bis 5 Gew.-% eines Divinylethers C1 und

    (a3) von 0 bis 5 mol-%, bezogen auf Komponente (b1) aus der Herstellung von P1, Verbindung D.

2. Biologisch abbaubare Polymere T1 mit einem Molekulargewicht ($M_n$) im Bereich von 10.000 bis 100.000 g/mol, mit einer Viskositätszahl im Bereich von 30 bis 450 g/ml (gemessen in o-Dichlorbenzol/Phenol (Gew.-Verhältnis

50/50) bei einer Konzentration von 0,5 Gew.-% Polymer T1 bei einer Temperatur von 25 °C) und einem Schmelzpunkt im Bereich von 50 bis 235°C, erhältlich durch Umsetzung eines Polyesters Q2 mit einem Molekulargewicht ($M_n$) im Bereich von 5000 bis 100000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer Q2 bei einer Temperatur von 25°C) und einem Schmelzpunkt im Bereich von 50 bis 235°C, erhältlich durch Reaktion einer Mischung bestehend im wesentlichen aus

(c1) Polyester P1, gemäß Anspruch 1,

(c2) 0,01 bis 50 Gew.-%, bezogen auf (c1), einer Hydroxycarbonsäure B1 gemäß den Formeln Ia oder Ib

$$HO-[-C(O)-G-O-]_pH$$

Ia

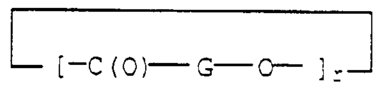

Ib

in denen p eine ganze Zahl von 1 bis 1500 und r eine ganze Zahl von 1 bis 4 bedeuten, und G für einen Rest steht, der ausgewählt ist aus der Gruppe bestehend aus Phenylen, $-(CH_2)_n-$, wobei n eine ganze Zahl von 1 bis 5 bedeutet, -C(R)H- und $-C(R)HCH_2$, wobei R für Methyl oder Ethyl steht, und

(c3) 0 bis 5 mol-%, bezogen auf Komponente (b1) aus der Herstellung von P1, Verbindung D, und drei bis sechs Hydroxyl und/oder Carboxylgruppen,

mit (d1) 0,1 bis 5 Gew.-%, bezogen auf den Polyester Q2, Divinylether C1 sowie mit (c2) 0 bis 5 mol-%, bezogen auf Komponente (b1) aus der Herstellung von Polyester Q2 über den Polyester P1, Verbindung D.

**3.** Biologisch abbaubare Polymere T2 mit einem Molekulargewicht ($M_n$) im Bereich von 10000 bis 100000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T2 bei einer Temperatur von 25°C) und einem Schmelzpunkt im Bereich von 50 bis 235°C, erhältlich durch Umsetzung des Polyesters Q1 gemäß Anspruch 1 mit

(e1) 0,01 bis 50 Gew.-%, bezogen auf Polyester Q1, Hydroxycarbonsäure B1, gemäß Anspruch 2, sowie mit

(e2) 0 bis 5 mol-%, bezogen auf Komponente (b1) aus der Herstellung von Polyester Q1 über den Polyester P1, Verbindung D und drei bis sechs Hydroxyl- und oder Carboxylgruppen.

**4.** Biologisch abbaubare Polymere T3 mit einem Molekulargewicht ($M_n$) im Bereich von 10000 bis 100000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T3 bei einer Temperatur von 25°C) und einem Schmelzpunkt im Bereich von 50 bis 235°C, erhältlich durch Umsetzung

(f1) eines Polyesters P2 mit einem Molekulargewicht ($M_n$) im Bereich von 5000 bis 80000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polyester P2 bei einer Temperatur von 25°C) und einen Schmelzpunkt im Bereich von 50 bis 235°C,
erhältlich durch Reaktion einer Mischung, bestehend im wesentlichen aus

(g1) einer Mischung, bestehend im wesentlichen aus

20 bis 95 mol-% Adipinsäure oder esterbildende Derivate davon oder Mischungen davon,

5 bis 80 mol-% Terephthalsäure oder esterbildende Derivate davon oder Mischungen davon, und

0 bis 5 mol-% einer sulfonatgruppenhaltigen Verbindung,

wobei die Summe der einzelnen Molprozentangaben 100 mol-% beträgt,

(g2) Dihydroxyverbindung (b2), gemäß Anspruch 1,
wobei man das Molverhältnis von (g1) zu (g2) im Bereich von 0,4:1 bis 1,5:1 wählt,

(g3) von 0,01 bis 100 Gew.-%, bezogen auf Komponente (g1), Hydroxycarbonsäure B1, gemäß Anspruch 2, und

(g4) von 0 bis 5 mol-%, bezogen auf Komponente (g1), Verbindung D, und drei bis sechs Hydroxyl- und/oder Carboxylgruppen

oder (f2) einer Mischung bestehend im wesentlichen aus Polyester P1, gemäß Anspruch 1, und 0,01 bis 50 Gew.-%, bezogen auf Polyester P1, Hydroxycarbonsäure B1, gemäß Anspruch 2, oder

(f3) einer Mischung bestehend im wesentlichen aus Polyestern P1, gemäß Anspruch 1, die eine unterschiedliche Zusammensetzung voneinander aufweisen,

mit 0,1 bis 5 Gew.-%, bezogen auf die Menge der eingesetzten Polyester, Divinylether C1 sowie

mit 0 bis 5 mol-%, bezogen auf die jeweiligen Molmengen an Komponente (b1), die zur Herstellung der eingesetzten Polyester (f1) bis (f3) eingesetzt wurden, Verbindung D.

**5.** Biologisch abbaubare thermoplastische Formmassen T4, erhältlich durch Mischen in an sich bekannter Weise von

(h1) 99,5 bis 0,5 Gew.-% Polyester Q1, gemäß Anspruch 1, mit

(h2) 0,5 bis 99,5 Gew.-% Hydroxycarbonsäure B1, gemäß Anspruch 2.

**6.** Verfahren zur Herstellung der biologisch abbaubaren Polyester Q1 gemäß Anspruch 1 in an sich bekannter Weise, dadurch gekennzeichnet, daß man eine Mischung, bestehend im wesentlichen aus

(a1) von 95 bis 99,9 Gew.-% Polyester P1,

(a2) von 0,1 bis 5 Gew.-% Divinylether C1 und

(a3) von 0 bis 5 mol-%, bezogen auf Komponente (b1) aus der Herstellung von P1, Verbindung D

zur Reaktion bringt.

**7.** Verfahren zur Herstellung der biologisch abbaubaren Polymeren T1 gemäß Anspruch 2 in an sich bekannter Weise, dadurch gekennzeichnet, daß man den Polyester Q2 mit

(d1) 0,1 bis 5 Gew.-%, bezogen auf den Polyester Q2, Divinylether C1 sowie mit

(d2) 0 bis 5 mol-%, bezogen auf Komponente (b1) aus der Herstellung von Polyester Q2 über den Polyester P1, Verbindung D zur Reaktion bringt.

**8.** Verfahren zur Herstellung der biologisch abbaubaren Polymeren T2 gemäß Anspruch 3 in an sich bekannter Weise, dadurch gekennzeichnet, daß man Polyester QI mit

(e1) 0,01 bis 50 Gew.-%, bezogen auf Polyester Q1, Hydroxycarbonsäure B1 sowie mit

(e2) 0 bis 5 mol-%, bezogen auf Komponente (b1) aus der Herstellung von Polyester Q1 über den Polyester P1, Verbindung D,

zur Reaktion bringt.

**9.** Verfahren zur Herstellung der biologisch abbaubaren Polymeren T3 gemäß Anspruch 4 in an sich bekannter Weise,

dadurch gekennzeichnet, daß man

(f1 Polyester P2, oder

(f2) eine Mischung, bestehend im wesentlichen aus Polyester P1 und 0,01 bis 50 Gew.-%, bezogen auf Polyester P1, Hydroxycarbonsäure B1, oder (f3) eine Mischung, bestehend im wesentlichen aus Polyestern P1, die eine unterschiedliche Zusammensetzung voneinander aufweisen,

mit 0,1 bis 5 Gew.-%, bezogen auf die Menge der eingesetzten Polyester, Divinylether C1 sowie

mit 0 bis 5 mol-%, bezogen auf die jeweiligen Molmengen an Komponente (b1), die zur Herstellung der eingesetzten Polyester (f1) bis (f3) eingesetzt wurden, Verbindung D, zur Reaktion bringt.

**10.** Verfahren zur Herstellung der biologisch abbaubaren thermoplastischen Formmassen T4 gemäß Anspruch 5 in an sich bekannter Weise, dadurch gekennzeichnet, daß man

99,5 bis 0,5 Gew.-% Polyester Q1 mit
0,5 bis 99,5 Gew.-% Hydroxycarbonsäure B1 mischt.

**11.** Verwendung der biologisch abbaubaren Polymere gemäß den Ansprüchen 1 bis 4 oder der thermoplastischen Formmassen gemäß Anspruch 5 oder hergestellt gemäß den Ansprüchen 6 bis 10 zur Herstellung von kompostierbaren Formkörpern.

**12.** Verwendung der biologisch abbaubaren Polymere gemäß den Ansprüchen 1 bis 4 oder der thermoplastischen Formmassen gemäß Anspruch 5 oder hergestellt gemäß den Ansprüchen 6 bis 10 zur Herstellung von Klebstoffen.

**13.** Kompostierbare Formkörper, erhältlich durch die Verwendung gemäß Anspruch 11.

**14.** Klebstoffe, erhältlich durch die Verwendung gemäß Anspruch 12.

**15.** Verwendung der biologisch abbaubaren Polymere gemäß den Ansprüchen 1 bis 4 oder der thermoplastischen Formmassen gemäß Anspruch 5 oder hergestellt gemäß den Ansprüchen 6 bis 10 zur Herstellung von biologisch abbaubaren Blends, enthaltend im wesentlichen die erfindungsgemäßen Polymere und Stärke.

**16.** Biologisch abbaubare Blends, erhältlich durch die Verwendung gemäß Anspruch 15.

**17.** Verfahren zur Herstellung biologisch abbaubarer Blends gemäß Anspruch 15 in an sich bekannter Weise, dadurch gekennzeichnet, daß man Stärke mit den erfindungsgemäßen Polymeren mischt.

**18.** Verwendung der biologisch abbaubaren Polymere gemäß den Ansprüchen 1 bis 4 oder der thermoplastischen Formmassen gemäß Anspruch 5 oder hergestellt gemäß den Ansprüchen 6 bis 10 zur Herstellung von biologisch abbaubaren Schäumen.

**19.** Biologisch abbaubare Schäume, erhältlich durch die Verwendung gemäß Anspruch 18.

**20.** Papierbeschichtungsmittel, erhaltlich aus den thermoplastischen Formmassen gemäß Anspruch 5 oder den biologische abbaubaren Polymeren gemäß den Anspruchen 1 bis 4.

## Claims

**1.** A biodegradable polyester Q1 with a molecular weight ($M_n$) in the range from 6000 to 60,000 g/mol, a viscosity number in the range from 30 to 350 g/ml (measured in o-dichlorobenzene/phenol (50/50 ratio by weight) at a concentration of 0.5% by weight of polyester Q1 at 25°C) and a melting point in the range from 50 to 170°C, obtainable by reacting a mixture essentially comprising

(a1) from 95 to 99.9% by weight of a polyester P1 obtainable by reacting a mixture essentially comprising

(b1) a mixture essentially comprising

35-95 mol% of adipic acid or ester-forming derivatives thereof or mixtures thereof,

5-65 mol% of terephthalic acid or ester-forming derivatives thereof or mixtures thereof, and

0-5 mol% of a compound containing sulfonate groups, where the total of the individual mole percentages is 100 mol%, and

(b2) a dihydroxy compound selected from the group consisting of $C_2$-$C_6$-alkanediols and $C_5$-$C_{10}$-cycloalkanediols, where the molar ratio of (b1) to (b2) is chosen in the range from 0.4:1 to 1.5:1,

with the proviso that the polyester P1 has a molecular weight ($M_n$) in the range from 5000 to 50,000 g/mol, a viscosity number in the range from 30 to 350 g/ml (measured in o-dichlorobenzene/phenol (50/50 ratio by weight) at a concentration of 0.5% by weight of polyester P1 at 25°C) and a melting point in the range from 50 to 170°C, and with the further proviso that from 0 to 5 mol%, based on the molar quantity of component (b1) employed, of a compound D with from three to six hydroxyl and/or carboxyl groups are employed to prepare the polyester P1,

(a2) from 0.1 to 5% by weight of a divinyl ether C1 and

(a3) from 0 to 5 mol%, based on component (b1) from the preparation of P1, of compound D.

**2.** A biodegradable polymer T1 with a molecular weight ($M_n$) in the range from 10,000 to 100,000 g/mol, with a viscosity number in the range from 30 to 450 g/ml (measured in o-dichlorobenzene/phenol (50/50 ratio by weight) at a concentration of 0.5% by weight of polymer T1 at 25°C) and a melting point in the range from 50 to 235°C, obtainable by reacting a polyester Q2 with a molecular weight ($M_n$) in the range from 5000 to 100,000 g/mol, a viscosity number in the range from 30 to 450 g/ml (measured in o-dichlorobenzene/phenol (50/50 ratio by weight) at a concentration of 0.5% by weight of polymer Q2 at 25°C) and a melting point in the range from 50 to 235°C, obtainable by reacting a mixture essentially comprising

(c1) polyester P1 as set forth in claim 1,

(c2) 0.01-50% by weight, based on (c1) of a hydroxycarboxylic acid B1 of the formulae Ia or Ib

$$HO{-}[{-}C(O){-}G{-}O{-}]_pH$$

Ia

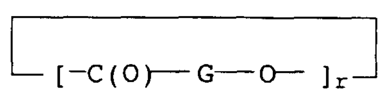

Ib

where p is an integer from 1 to 1500 and r is an integer from 1 to 4, and G is a radical which is selected from the group consisting of phenylene, $-(CH_2)_n-$, where n is an integer from 1 to 5, -C(R)H- and $-C(R)HCH_2$, where R is methyl or ethyl, and

(c3) 0-5 mol%, based on component (b1) from the 5 preparation of P1, of compound D with from three to six hydroxyl and/or carboxyl groups,

with (d1) 0,1-5% by weight, based on the polyester Q2, of divinyl ether C1 and with (c2) 0-5 mol%, based on component (b1) from the preparation of polyester Q2 via the polyester P1, of compound D.

**3.** A biodegradable polymer T2 with a molecular weight ($M_n$) in the range from 10,000 to 100,000 g/mol, with a viscosity number in the range from 30 to 450 g/ml (measured in o-dichlorobenzene/phenol (50/50 ratio by weight) at a concentration of 0.5% by weight of polymer T2 at 25°C) and a melting point in the range from 50 to 235°C, obtainable by reacting the polyester Q1 as claimed in claim 1 with

(e1) 0.01-50% by weight, based on polyester Q1, of hydroxy carboxylic acid B1 as set forth in claim 2 and with

(e2) 0-5 mol%, based on component (b1) from the preparation of polyester Q1 via polyester P1, of compound D with from three to six hydroxyl and/or carboxyl groups.

**4.** A biodegradable polymer T3 with a molecular weight ($M_n$) in the range from 10,000 to 100,000 g/mol, a viscosity number in the range from 30 to 450 g/ml (measured in o-dichlorobenzene/phenol (50/50 ratio by weight) at a concentration of 0.5% by weight of polymer T3 at 25°C) and a melting point in the range from 50 to 235°C, obtainable by reacting

(f1) a polyester P2 with a molecular weight ($M_n$) in the range from 5000 to 80,000 g/mol, a viscosity number in the range from 30 to 450 g/ml (measured in o-dichlorobenzene/phenol (50/50 ratio by weight) at a concentration of 0.5% by weight of polyester P2 at 25°C) and a melting point in the range from 50 to 235°C, obtainable by reacting a mixture essentially comprising

(g1) a mixture essentially comprising

20-95 mol% of adipic acid or ester-forming derivatives thereof or mixtures thereof,

5-80 mol% of terephthalic acid or ester-forming derivatives thereof or mixtures thereof, and

0-5 mol% of a compound which contains sulfonate groups,

where the total of the individual mole percentages is 100 mol%,

(g2) dihydroxy compound (b2) as set forth in claim 1,
where the molar ratio of (g1) to (g2) is chosen in the range from 0.4:1 to 1.5:1,

(g3) from 0.01 to 100% by weight, based on component (g1), of hydroxy carboxylic acid B1 as set forth in claim 2, and

(g4) from 0 to 5 mol%, based on component (g1), of compound D with from three to six hydroxyl and/or carboxyl groups,
or

(f2) a mixture essentially comprising polyester P1 as set forth in claim 1 and 0.01-50% by weight, based on polyester P1, of hydroxy carboxylic acid B1 as set forth in claim 2, or

(f3) a mixture essentially comprising polyesters P1 as set forth in claim 1 which differ from one another in composition,

with 0.1-5% by weight, based on the quantity of the polyesters employed, of divinyl ether C1 and

with 0-5 mol%, based on the particular molar quantities of component (b1) employed to prepare the polyesters (f1) to (f3) employed, of compound D.

**5.** A biodegradable thermoplastic molding composition T4, obtainable by mixing in a conventional way

(h1) 99.5-0.5% by weight of polyester Q1 as claimed 5 in claim 1 with

(h2) 0.5-99.5% by weight of hydroxy carboxylic acid B1 as set forth in claim 2.

**6.** A process for preparing a biodegradable polyester Q1 as claimed in claim 1 in a conventional way, which comprises reacting a mixture essentially comprising

(a1) from 95 to 99.9% by weight of polyester P1,

(a2) from 0.1 to 5% by weight of divinyl ether C1 and

(a3) from 0 to 5 mol%, based on component (b1) from the preparation of P1, of compound D.

**7.** A process for preparing a biodegradable polymer T1 as claimed in claim 2 in a conventional way, which comprises reacting the polyester Q2 with

(d1) 0,1-5% by weight, based on the polyester Q2, of divinyl ether C1 and with

(d2) 0-5 mol%, based on component (b1) from the preparation of polyester Q2 via polyester P1, of compound D.

**8.** A process for preparing a biodegradable polymer T2 as claimed in claim 3 in a conventional way, which comprises reacting polyester Q1 with

(e1) 0.01-50% by weight, based on polyester Q1, of hydroxy carboxylic acid B1 and with

(e2) 0-5 mol%, based on component (b1) from the preparation of polyester Q1 via polyester P1, of compound D.

**9.** A process for preparing a biodegradable polymer T3 as claimed in claim 4 in a conventional way, which comprises reacting

(f1) polyester P2, or

(f2) a mixture essentially comprising polyester P1 and 0.01-50% by weight, based on polyester P1, of hydroxy carboxylic acid B1 or (f3) a mixture essentially comprising polyesters P1 which differ from one another in composition,

with 0,1-5% by weight, based on the quantity of the polyesters employed, of divinyl ether C1 and

with 0-5 mol%, based on the particular molar quantities of component (b1), employed to prepare the polyesters (f1) to (f3) employed, of compound D.

**10.** A process for preparing a biodegradable thermoplastic molding composition T4 as claimed in claim 5 in a conventional way, which comprises mixing

99.5-0.5% by weight of polyester Q1 with
0.5-99.5% by weight of hydroxy carboxylic acid B1.

**11.** The use of the biodegradable polymers as claimed in claims 1 to 4 or of the thermoplastic molding compositions as claimed in claim 5 or prepared as claimed in claims 6 to 10 for the production of compostable moldings.

**12.** The use of the biodegradable polymers as claimed in claims 1 to 4 or of the thermoplastic molding compositions as claimed in claim 5 or prepared as claimed in claims 6 to 10 for the production of adhesives.

**13.** A compostable molding obtainable by the use as claimed in claim 11.

**14.** An adhesive obtainable by the use as claimed in claim 12.

**15.** The use of the biodegradable polymers as claimed in claims 1 to 4 or of the thermoplastic molding compositions as claimed in claim 5 or prepared as claimed in claims 6 to 10 for the production of biodegradable blends essentially containing the polymers according to the intention and starch.

**16.** A biodegradable blend obtainable by the use as claimed in claim 15.

**17.** A process for producing biodegradable blends as claimed in claim 15 in a conventional way, which comprises mixing starch with the polymers according to the invention.

**18.** The use of the biodegradable polymers as claimed in claims 1 to 4 or of the thermoplastic molding compositions as claimed in claim 5 or prepared as claimed in claims 6 to 10 for the production of biodegradable foams.

**19.** A biodegradable foam obtainable by the use as claimed in claim 18.

20. A paper coating agent obtainable from a thermoplastic molding composition as claimed in claim 5 or a biodegradable polymer as claimed in claims 1 to 4.

## Revendications

1. Polyesters biologiquement dégradables Q1 d'un poids moléculaire (Mn) qui varie de 6000 à 60000 g/mole, d'un indice de viscosité qui varie de 30 à 350 g/ml (mesuré dans le o-dichlorobenzène/phénol (rapport pondéral 50/50) à la concentration de 0,5% en poids de polyesters Q1 et à la température de 25°C) et d'un point de fusion qui varie de 50 à 170°C, que l'on peut obtenir par la réaction d'un mélange essentiellement constitué de

   (a1) 95 à 99,9% en poids d'un polyester P1, que l'on peut obtenir par la réaction d'un mélange essentiellement constitué de

      (b1) un mélange, essentiellement constitué de

         35 à 95% molaires d'acide adipique ou de dérivés estérogènes de celui-ci, ou de leurs mélanges,

         5 à 65% molaires d'acide téréphtalique ou de dérivés estérogènes de celui-ci, ou de leurs mélanges, et

         0 à 5% molaires d'un composé contenant des radicaux sulfonate, où la somme des indications en pourcentages molaires individuelles totalise 100% molaires, et

      (b2) un composé dihydroxylé, choisi dans le groupe constitué d'alcanediols en $C_2$ à $C_6$ et de cycloalcanediols en $C_5$ à $C_{10}$, où le rapport molaire de (b1) et (b2) varie dans la plage de 0,4:1 à 1,5:1,

   avec la condition que les polyesters P1 présentent un poids moléculaire ($M_n$) qui varie de 5000 à 50000 g/mole, un indice de viscosité qui varie de 30 à 350 g/ml (mesuré dans le o-dichlorobenzène/phénol (rapport pondéral 50/50) à la concentration de 0,5% en poids de polyesters P1 à la température de 25°C) et un point de fusion qui varie de 50 à 170°C, et avec la condition supplémentaire que l'on mette en oeuvre de 0 à 5% molaires, par rapport à la quantité molaire du composant (b1) utilisé, un composé D avec de trois à six radicaux hydroxyle et/ou carboxyle pour la préparation du polyester P1,

      (a2) de 0,1 à 5% en poids d'un éther divinylique C1 et

      (a3) de 0 à 5% molaires, par rapport au composant (b1) de la préparation de P1, de composé D.

2. Polymères biologiquement dégradables T1, d'un poids moléculaire (Mn) qui varie de 10000 à 100000g/mole, d'un indice de viscosité qui varie de 30 à 450 g/ml (mesuré dans le o-dichlorobenzène/phénol (rapport pondéral 50/50) à la concentration de 0,5% en poids de polymère T1 et à la température de 25°C) et d'un point de fusion qui varie de 50 à 235°C, que l'on peut obtenir par la réaction d'un polyester Q2 d'un poids moléculaire ($M_n$) qui varie de 5000 à 100000 g/mole, d'un indice de viscosité qui varie de 30 à 350 g/ml (mesuré dans le o-dichlorobenzène/phénol (rapport pondéral 50/50) à la concentration de 0,5% en poids de polymère Q2 et à la température de 25°C) et d'un point de fusion qui varie de 50 à 235°C, que l'on peut obtenir par la réaction d'un mélange essentiellement constitué de

   (c1) des polyesters P1, selon la revendication 1,

   (c2) 0,01 à 50% en poids, par rapport à (c1) d'un acide hydroxycarboxylique B1 selon les formules Ia ou Ib :

$$HO-[-C(O)-G-O-]_pH$$

Ia

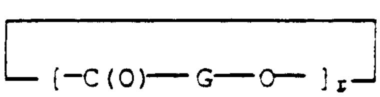

Ib

dans lesquelles p représente un nombre entier dont la valeur varie de 1 à 1500 et r représente un nombre entier dont la valeur varie de 1 à 4, et G représente un radical choisi dans le groupe formé par les radicaux phénylène, $-(CH_2)_n-$, où n représente un nombre entier dont la valeur varie de 1 à 5, -C(R)H- et $-C(R)HCH_2$, où R représente le radical méthyle ou éthyle,
et

(c3) 0 à 5% molaires, par rapport au composant (b1) de la préparation de P1, de composé D, avec trois à six radicaux hydroxyle et/ou carboxyle,
avec

(d1) 0,1 à 5% en poids, par rapport aux polyesters Q2, d'éthers divinyliques C1, ainsi qu'avec (c2) 0 à 5% molaires, par rapport au composant (b1) de la préparation des polyesters Q2 en passant par les polyesters P1, de composé D.

**3.** Polymères biologiquement dégradables T2, d'un poids moléculaire ($M_n$) qui varie de 10000 à 100000g/mole, d'un indice de viscosité qui varie de 30 à 450 g/ml (mesuré dans le o-dichlorobenzène/phénol (rapport pondéral 50/50) à la concentration de 0,5% en poids de polymère T2 et à la température de 25°C) et d'un point de fusion qui varie de 50 à 235°C, que l'on peut obtenir par la réaction du polyester Q1 suivant la revendication 1, avec

(e1) 0,01 à 50% en poids, par rapport aux polyesters Q1, d'acides hydroxycarboxyliques B1, suivant la revendication 2, ainsi qu'avec

(e2) 0 à 5% molaires, par rapport au composant (b1) de la préparation de polyesters Q1 en passant les polyesters P1, de composé D, avec trois à six radicaux hydroxyle ou carboxyle.

**4.** Polymères biologiquement dégradables T3, d'un poids moléculaire (Mn) qui varie de 10000 à 100000g/mole, d'un indice de viscosité qui varie de 30 à 450 g/ml (mesuré dans le o-dichlorobenzène/phénol (rapport pondéral 50/50) à la concentration de 0,5% en poids de polymère T3 et à la température de 25°C) et d'un point de fusion qui varie de 50 à 235°C, que l'on peut obtenir par la réaction de

(f1) un polyester P2 d'un poids moléculaire ($M_n$) qui varie de 5000 à 80000 g/mole, d'un indice de viscosité qui varie de 30 à 450 g/ml (mesuré dans le o-dichlorobenzène/phénol (rapport pondéral 50/50) à la concentration de 0,5% en poids de polyesters P2 et à la température de 25°C) et d'un point de fusion qui varie de 50 à 235°C,
que l'on peut obtenir par la réaction d'un mélange, essentiellement constitué de

(g1) un mélange essentiellement constitué de

20 à 95% molaires d'acide adipique ou de dérivés estérogènes de celui-ci, ou de leurs mélanges,

5 à 80% molaires d'acide téréphtalique ou de dérivés estérogènes de celui-ci, ou de leurs mélanges, et

0 à 5% molaires d'un composé contenant des radicaux sulfonate,

où la somme des indications en pourcentages molaires individuelles totalise 100% molaires,

(g2) un composé dihydroxylé (b2), suivant la revendication 1,
où le rapport molaire de (g1) et (g2) varie de 0,4:1 à 1,5:1,

(g3) de 0,01 à 100% en poids, par rapport au composant (g1), d'acides hydroxycarboxyliques B1, suivant la revendication 2, et

(g4) de 0 à 5% molaires, par rapport au composant (g1), de composé D, avec trois à six radicaux hydroxyle et/ou carboxyle,
ou

(f2) un mélange essentiellement constitué de polyesters P1, suivant la revendication 1, et de 0,01 à 50% en

poids, par rapport aux polyesters P1, d'acides hydroxycarboxyliques B1, suivant la revendication 2, ou

(f3) un mélange constitué essentiellement de polyesters P1, suivant la revendication 1, qui présentent une composition qui diffère mutuellement les uns des autres,

avec 0,1 à 5% en poids, par rapport à la quantité des polyesters mis en oeuvre, d'éthers divinyliques C1, ainsi que

avec de 0 à 5% molaires, par rapport aux proportions molaires en composant (b1), qui furent mises en oeuvre pour la préparation des polyesters utilisés (f1) à (f3), de composé D.

**5.** Masse à mouler thermoplastiques biologiquement dégradables T4, que l'on peut obtenir par le mélange, de manière en soi connue, de

(h1) 99,5 à 0,5% en poids de polyesters Q1, suivant la revendication 1, avec

(h2) 0,5 A 99,5% en poids d'acides hydroxycarboxyliques B1, suivant la revendication 2.

**6.** Procédé de préparation de polyesters Q1 biologiquement dégradables suivant la revendication 1, de manière en soi connue, caractérisé en ce que l'on fait réagir un mélange, essentiellement constitué de

(a1) 95 à 99,9% en poids de polyesters P1,

(a2) 0,1 à 5% en poids d'éthers divinyliques C1, et

(a3) 0 à 5% molaires, par rapport au composant (b1) de la préparation de P1, de composé D.

**7.** Procédé de préparation de polymères biologiquement dégradables T1 suivant la revendication 2, d'une manière en soi connue, caractérisé en ce que l'on fait réagir les polyesters Q2 avec

(d1) 0,1 à 5% en poids, par rapport aux polyesters Q2, d'éthers divinyliques C1, ainsi qu'avec

(d2) 0 à 5% molaires, par rapport au composant (b1) de la préparation de polyesters Q2 en passant par des polyesters P1, de composé D.

**8.** Procédé de préparation des polymères biologiquement dégradables T2 suivant la revendication 3, d'une manière en soi connue, caractérisé en ce que l'on fait réagir des polyesters Q1, avec

(e1) 0,01 à 50% en poids, par rapport aux polyesters Q1, d'acides hydroxycarboxyliques B1, ainsi qu'avec

(e2) 0 à 5% molaires, par rapport au composant (b1) de la préparation de polyesters Q1 en passant par les polyesters P1, de composé D.

**9.** Procédé de préparation des polymères biologiquement dégradables T3 suivant la revendication 4, d'une manière en soi connue, caractérisé en ce que l'on fait réagir

(f1) des polyesters P2, ou

(f2) un mélange essentiellement constitué de polyesters P1 et de 0,01 à 50% en poids, par rapport aux polyesters P1, d'acides hydroxycarboxyliques B1, ou

(f3) un mélange, essentiellement constitué de polyesters P1, qui présentent une composition mutuellement différente les uns par rapport aux autres,

avec 0,1 à 5% en poids, par rapport à la quantité des polyesters mis en oeuvre, d'éthers divinyliques C1, ainsi que

avec 0 à 5% molaires, par rapport aux quantités molaires concernées en composant (b1) pour la préparation des polyesters (f1) à (f3) mis en oeuvre, de composé D.

**10.** Procédé de préparation des masses à mouler thermoplastiques biologiquement dégradables T4 suivant la revendication 5, d'une manière en soi connue, caractérisé en ce que l'on mélange

99,5 à 0,5% en poids de polyesters Q1 avec
0,5 à 99,5% en poids d'acides hydroxycarboxyliques B1.

**11.** Utilisation des polymères biologiquement dégradables suivant les revendications 1 à 4, ou des masses à mouler thermoplastiques suivant la revendication 5, ou préparées suivant les revendications 6 à 10, pour la fabrication d'articles moulés compostables.

**12.** Utilisation des polymères biologiquement dégradables suivant les revendications 1 à 4, ou des masses à mouler thermoplastiques suivant la revendication 5, ou préparées suivant les revendications 6 à 10, pour la fabrication de colles.

**13.** Articles moulés compostables, que l'on peut obtenir par l'utilisation suivant la revendication 11.

**14.** Colle, que l'on peut obtenir par l'utilisation suivant la revendication 12.

**15.** Utilisation des polymères biologiquement dégradables suivant les revendications 1 à 4, ou des masses à mouler thermoplastiques suivant la revendication 5, ou préparées suivant les revendications 6 à 10, pour la préparation d'un mélange biologiquement dégradable, contenant essentiellement les polymères conformes à l'invention et de l'amidon.

**16.** Mélanges biologiquement dégradables, que l'on peut obtenir par l'utilisation suivant la revendication 15.

**17.** Procédé de préparation de mélanges biologiquement dégradables suivant la revendication 15, d'une manière en soi connue, caractérisé en ce que l'on mélange de l'amidon et les polymères conformes à la présente invention.

**18.** Utilisation des polymères biologiquement dégradables suivant les revendications 1 à 4, ou des masses à mouler thermoplastiques suivant la revendication 5, ou préparées suivant les revendications 6 à 10, en vue de la fabrication de mousses biologiquement dégradables.

**19.** Mousses biologiquement dégradables, que l'on peut obtenir par l'utilisation suivant la revendication 18.

**20.** Agents d'encollage du papier, que l'on peut obtenir à partir des masses à mouler thermoplastiques suivant la revendication 5, ou des polymères biologiquement dégradables suivant les revendications à 4.